# EUROPEAN PATENT APPLICATION

(11) **EP 2 818 083 A2**
(43) Date of publication of application: **31.12.2014**
(21) Application number: 14167690.8
(22) Date of filing: 09.05.2014
(51) Int. Cl.: A47J 27/00

(54) **Eco green cookware**

(30) Priority: 28.06.2013 KR 20130075476
(71) Applicant: Park, Jong Do, Pasadena, CA 91106 (US)
(72) Inventor: Park, Jong Do, Pasadena, CA 91106 (US)
(74) Representative: Maiwald Patentanwalts GmbH

(57) **Abstract**

This invention relates to a cooking vessel having a double-layered wall structure, comprising an inner shell and an outer shell. A silicon ring is disposed between the top and bottom flanges of the inner and outer shells. The knob of the cover of the cooking vessel is provided with a means for gauging temperature whose bottom portion is extended to inside the cooking vessel. A heat conduction plate is affixed to the bottom surface of the inner shell and a plurality of raised ridges are formed on the bottom surface of the outer shell. Additionally, the cooking vessel further comprises a cover and a plurality of embossed ridges are formed in an inner surface of the cover. The cooking vessel further comprises a pressure releasing device for releasing the pressure within the inner space between the inner and outer shells.

## Description

### FIELD OF THE INVENTION

The present invention relates to cookware, and more particularly, to eco green cookware having a double-layered wall structure and comprising a heat transfer medium within a space in the double-layered wall structure, thereby reducing the risk of explosion, savings energy and lengthening the heat retention time of the cookware.

### BACKGROUND OF THE INVENTION

There are various types of cooking vessels that are known and used to prepare food. Cooking vessels such as a pan and a rice cooker are generally made of a single-layered stainless steel. The single-layered stainless steel has the advantage of fast heat transfer rate, but also has disadvantages that food sticks to the cooking vessel and that cooking by fast and excessive heat transfer results in burning the food on the bottom of the cooking vessel and loss of vitamins, nutrients and natural flavors.

To solve the above problem, cooking vessels having a double-layered structure have been introduced and proposed for preventing burnt food and preserving nutrients and natural flavors.

Japanese Utility Model Laid-Open No. Sho56-169825 teaches a heating pot comprising an inner wall and an outer wall, wherein a closed space is provided therebetween, and a working fluid is injected, the working fluid vaporizing and moving by heating within the space, and condensing by cooling. Japanese Utility Model Laid-Open No. Sho63-48526 teaches a heat-insulated cooking apparatus, wherein a vacuum heat-insulated layer is formed in a container and in a side wall portion, and heat is transferred from a bottom portion, the container comprising the side wall portion and bottom portion.

However, such cooking vessels have poor heat efficiency and the risk of explosion because of a high pressure of the substances between an inner wall and an outer wall.

Generally, the inner wall and the outer wall are rolled together to form a rolled joint. The rolled joint may become weakened in that it is no longer an effective seal and liquid may enter the space between the inner and outer walls. If the double-layered cooking vessel is repeatedly used for cooking and being washed, liquid may accumulate in the space. The liquid trapped in the space may lead to corrosion of the inner and outer walls and deformation of the cooking vessel. When the corroded or deformed cooking vessel is heated, the liquid may create excessive steam pressure, and the cooking vessel may explode. To resolve the risk of explosion, a pressure control valve was introduced, but complicated design and manufacturing process of the pressure control valve resulted in increased manufacturing cost.

Besides, the conventional cooking vessels have the problem that when cooking soup, soup within the vessels leaks out and thus, vitamins and other nutrients are destroyed or lost.

Accordingly, to solve the above problems, a need for eco-green cookware having a safer and more efficient double-layered wall structure has been present for a long time considering the expansive demands in the everyday life. This invention is directed to solve these problems and satisfy the long-felt need.

An object of the invention is to provide eco-green cookware having a safer and more efficient double-layered wall structure.

The object of the invention is not limited to it, and from the following disclosure, those skilled in the art can clearly understand that there can be other objects not mentioned.

### SUMMARY OF THE INVENTION

In order to solve the above problems, an embodiment of a cooking vessel having a double-layered wall structure according to the present invention comprises an inner shell having an opening having a bottom surface of the inner shell which extends upwardly to terminate at a top flange, a portion of the top flange forming an inner rim and an outer rim, the inner rim having a radius smaller than radius of the outer rim, an outer shell having a bottom surface of the outer shell which extends upwardly to terminate at a bottom flange, the bottom flange having a length smaller than the length of the top flange, an inner space formed in an area between the inner shell and the outer shell and at least partially containing a heat conduction medium, and a silicon ring disposed between the top flange and the bottom flange.

In order to solve the above problems, another embodiment of the cooking vessel having a double-layered wall structure according to the present invention comprises an inner shell having an opening, an outer shell wherein a wall space and a bottom space are provided between the inner shell and the outer shell, the wall space being formed along the height of the inner shell, and wherein the wall space and the bottom space are partially filled with a heat conduction medium, a first heat conduction plate affixed to and in contact with a bottom surface of the inner shell; and a second heat conduction plate affixed to and in contact with a bottom surface of the outer shell, wherein the bottom surface of the outer shell is configured to form a raised ridge structure being upwardly raised and the second heat conduction plate is configured to conform to the shape of the raised ridge.

In order to solve the above problems, still another embodiment of the cooking vessel having a double-layered wall structure according to the present invention comprises an inner shell having an opening, an outer shell wherein a wall space and a bottom space are provided between the inner shell and the outer shell, the wall space being formed along the height of the inner shell, and wherein the wall space and the bottom space are partially filled with a heat conduction medium, a first heat conduction plate affixed to and in contact with a bottom surface of the inner shell; and a second heat conduction plate affixed to and in contact with a bottom surface of the outer shell, wherein the bottom surface of the outer shell is configured to form a raised ridge structure being upwardly raised and the second heat conduction plate is configured to conform to the shape of the raised ridge, wherein the plurality of the raised ridges are upwardly raised and extend from the center of the bottom surface of the outer shell and to the edge of the bottom surface of the outer shell, and wherein the plurality of the raised ridges has a curvature in a longitudinal direction, being curved to the same direction.

In order to solve the above problems, still another embodiment of the cooking vessel having a double-layered wall structure according to the present invention comprises an inner shell having an opening, an outer shell wherein a wall space and a bottom space are provided between the inner shell and the outer shell, the wall space being formed along the height of the inner shell, and wherein the wall space and the bottom space are partially filled with a heat conduction medium, a heat conduction plate affixed to and in contact with a bottom surface of the outer shell, and a cover that fits over the inner shell flange to cover the opening defined by the inner shell, wherein a plurality of protrusions are formed on the bottom surface of the cover.

Other detailed matters of the present invention are included in the detailed description and drawings. The advantages, other features and aspects of the present invention will be better understood with reference to the accompanying drawings.

The present invention provides an eco-green cookware having a safer and more efficient double-layered wall structure.

### BRIEF DESCRIPTION OF THE DRAWINGS

FIG. 1 shows a perspective view of the cooking vessel according to the present invention;
FIG. 2 shows a cross-sectional view of the cooking vessel according to the present invention;
FIG. 3 shows a partial cross-sectional view of the cooking vessel according to the present invention;
FIG. 4 shows an A-A' cross-sectional view of the cooking vessel of FIG. 3 according to the present invention;
FIG. 5 shows a cross-sectional view of the cover of the cooking vessel according to the present invention;
FIG. 6 shows a bottom plan view of the cover of the cooking vessel according to the present invention;
FIG. 7 shows a cross-sectional view of another embodiment of the cover of the cooking vessel according to the present invention;
FIG. 8 shows a bottom plan view of another embodiment of the cover of the cooking vessel of FIG. 7 according to the present invention;
FIG. 9 shows a cross-sectional view of the cover of the cooking vessel having a means for gauging temperature according to the present invention;
FIG. 10 illustrates an enlarged cross-sectional view of the pressure release device of the cooking vessel according to the present invention;
FIG. 11 shows a partial cross-sectional view of the cooking vessel according to the present invention;
FIG. 12 shows an enlarged cross-sectional view of the rolled joint of the cooking vessel; and
FIG. 13 shows a display unit of a means for gauging temperature according to the present invention.

### DETAILED DESCRIPTION EMBODIMENTS OF THE INVENTION

The advantages and features of the present invention, and how to obtain them will be better understood with reference to the examples which will be illustrated in detail together with the accompanying drawings. However, the present invention is not limited to the examples disclosed hereinafter, and can be embodied in various other forms. The present examples are merely to complete the disclosure of the present invention, and to completely explain the scope of the invention to those skilled in the art, and the present invention is defined by the claims only. Throughout the specification, the same reference numeral refers to the same constitutional element.

The terms used in the present specification are to explain the examples, not to limit the present invention. In the specification, terms in singular form include terms in plural form, unless specifically mentioned otherwise. The terms "comprises" and/or "comprising" used in the specification mean that the constitutional element, step and operation mentioned do not exclude the presence or addition of at least one other constitutional element, step or operation.

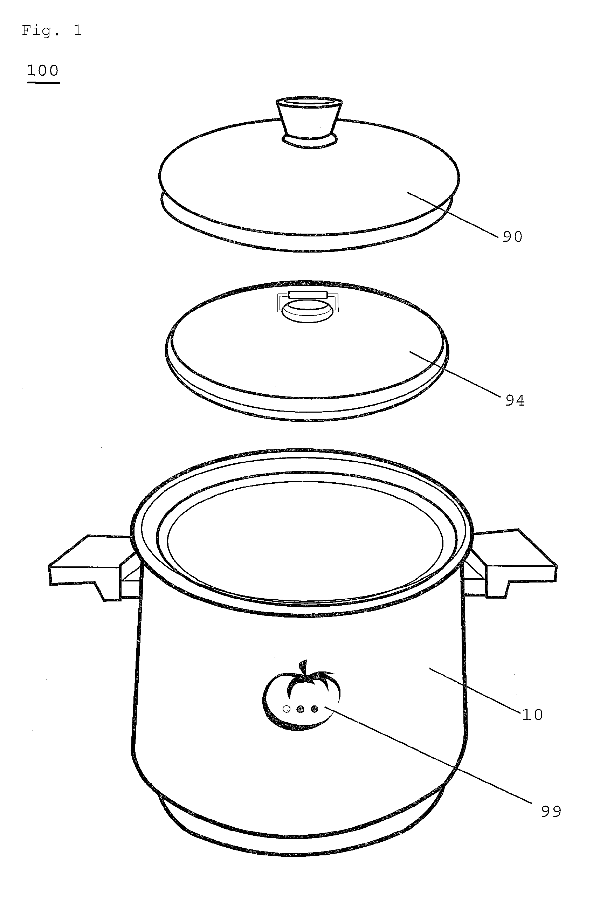

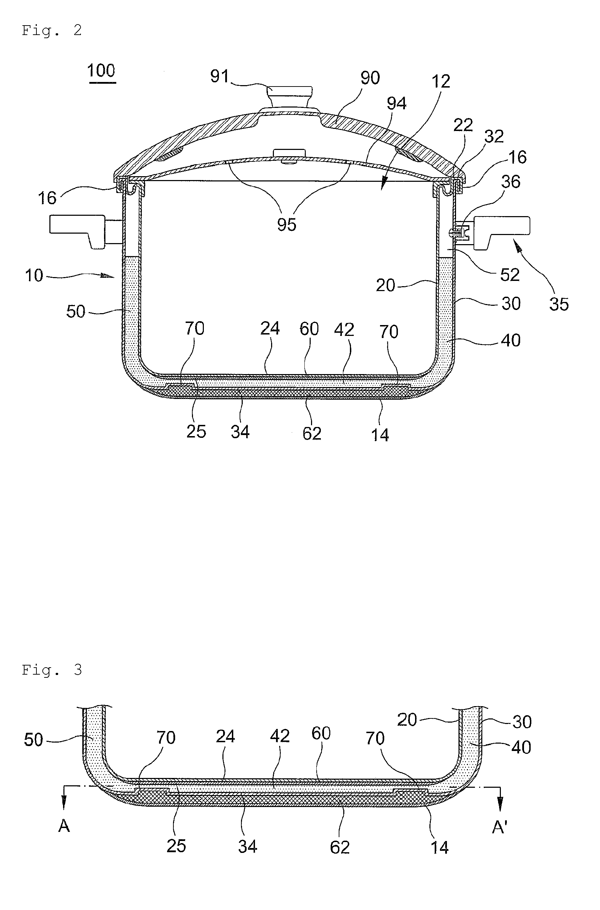

FIGS. 1 and 2 show a perspective view and a cross-sectional view of the cooking vessel according to the present invention. The cooking vessel 100 comprises a container 10, an inner lid 94, and a cover 90. The inner lid 94 substantially covers the opening 12 defined by the inner shell 20 and two steam holes 95 are formed on the inner lid 94. The container 10 is constructed to have a double-layered wall structure, comprising: an inner shell 20 having an opening 12; an outer shell 30 wherein a wall space 40 and a bottom space 42 are provided between the inner shell 20 and the outer shell 30, the wall space 40 being formed substantially along the height of the inner shell 20, and wherein the wall space 40 and the bottom space 42 are partially filled with a heat conduction medium 50. The wall space 40 and the bottom space 42 are collectively called an inner space.

Due to the double-layered wall structure of the container 10 and the cover 90 with the presence of the inner lid made of a tempered glass and having two steam holes, it is easy to preserve the heat inside the cooking vessel 100 as the inner lid 94 and the cover 90 stop the heat dissipating upward. The space between the inner lid 94 and the cover 90 traps heat therein and holds the temperature for an extended period of time. Besides, once the heat conduction medium 50 is heated, it slowly transfers its heat to the food for an extended period of time.

Accordingly, the present invention prevents food from being burnt or being partially heated and cooked, since the flame of heating source is not directly transferred to the inner shell 20 and the heat is not focused on any one specific region. Additionally, the cooking vessel 100 preserves vitamins, nutrients and natural flavors, creating a more pleasing and uniform texture to the cooking food. Besides, in addition to the silicon oil, the air 52 stored in the wall space 40 acts as an insulator. Therefore, the food stays hot for a longer period of time and heat efficiency of the cooking utensil is improved.

FIG. 3 shows a partial cross-sectional view of one embodiment of the cooking vessel according to the present invention. The cooking vessel 100 comprises a container 10, an inner lid 94, and a cover 90. The container 10 is constructed to have a double-layered wall structure, comprising: an inner shell 20; an outer shell 30; a first heat conduction plate 60 affixed to and in contact with a bottom surface 24 of the inner shell 20; and a second heat conduction plate 62 affixed to and in contact with a bottom surface 34 of the outer shell 30; wherein the bottom surface 34 of the outer shell 30 is configured to form a raised ridge structure 70 being raised upward and the second heat conduction plate 62 is configured to substantially conform to the shape of the raised ridge structure 70. Thanks to the first heat conduction plate 60, food does not stick to the bottom of the container 10, and thus non-adhesive coating is not required. Furthermore, as opposed to conventional non-adhesive coatings, which can cause ingredients harmful to the human body, the present invention uses the first heat conduction plate 60 instead of non-adhesive coating, and thus does not cause any ingredients harmful to the human body while cooking.

As shown in FIG. 3, the raised ridge structure 70 is formed apart from and along the edge of the bottom surface 34 of the outer shell 30. Preferably, the raised ridge structure 70 is annular and substantially coaxially located with respect to the center of the bottom surface 34 of the outer shell 30.

The raised ridge structure 70 forms a partial boundary for the heat conduction medium 50 located in the bottom space 42. When heated, the heat conduction medium 50 located in the bottom space 42 rotates and circulates fast in the space defined by the raised ridge structure 70 and the bottoms 24, 34 of the inner shell 20 and outer shell 30 because without the raised ridge structure 70, the heat conduction medium 50 will freely flow between the bottom space 42 and the wall space 40. This fast flow and circulation of the heat conduction medium 50 in the space within the bottom space 42 improves heat transfer efficiency of the cooking vessel 100.

The heat conduction medium 50 is, preferably, silicon oil. When energized, the heating element produces heat which in turn heats the silicon oil. The hot silicon oil heats the inner shell 20 and thus cooks the food in the container 10. Silicon oil can have a heat preservation rate of 70% or more even when the food has been stored in the cooking vessel 100 for an extended period of time.

The heat conduction medium 50 may occupy approximately 55-70% of the wall and bottom spaces 40, 42 by volume, preferably about 65% by volume. The wall space 40 partially contains air 52 as well. The heat conduction medium 50 is provided within the wall space 40 and the bottom space 42 between the inner shell 20 and the outer shell 30 so that the cooking vessel 100 according to the present invention is suitable for transferring heat during cooking.

The presence of silicon oil 50 and air 52 in the wall and bottom spaces 40, 42 delays heat transfer between the sides of the inner and outer shells 20, 30 as well as provides even and fast heat distribution as the heat conducted through the outer shell 30 of the cooking vessel 100 is transferred to the inner shell 20 of the cooking vessel 100 not just through silicon oil 50, but also partially through the air 52.

The heat distributed uniformly and evenly in the inner shell 20 heats up the content in the cooking vessel 100. Once heated, the double-layered structure of the cooking vessel 100 according to the present invention traps the heat, even after the heat source is removed, for a prolonged period. Thus, the cooking vessel 100 keeps the food warm for about four hours or more and allows the food to be cooked automatically and slowly, thereby preventing the loss of natural flavors. This allows for self-cooking where food is automatically cooked even after the heat source is removed.

The first heat conduction plate 60 is, preferably, made of aluminum or copper. The second heat conduction plate 62 is, preferably, made of aluminum or copper.

The inner shell 20 and the outer shell 30 may be made of AISI304. In addition, the cooking vessel 100 may further comprise a support cover 14 configured to fit in surrounding relation to the second heat conduction plate 62. Alternatively, the outer shell 30 may be made of 3-ply stainless steel, which consists of three layers of AISI 304, aluminum, and AISI 304. This 3-ply stainless steel structure enables greater heat conductivity and helps even and fast heat distribution.

The cooking vessel 100 may further include a thermochromic paint 99 affixed to outer surface of the outer shell to show the temperature of the container 10. The thermochromic paint 99 may be affixed to various portions. It can be affixed to any part of the cooking vessel 100 as far as a temperature can be shown. Preferably, the color of the thermochromic paint 99 changes from green to yellow and to red as the temperature of the container 10 increases.

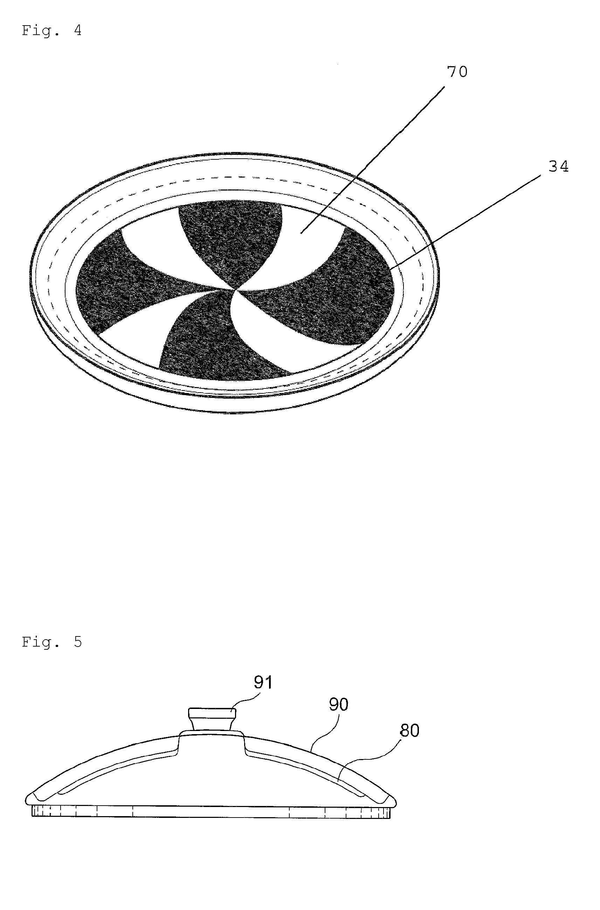

In another embodiment of the present invention, the container 10 is constructed to have a double-layered wall structure, comprising: an inner shell 20 having an opening 12; an outer shell 30 wherein a wall space 40 and a bottom space 42 are provided between the inner shell 20 and the outer shell 30, the wall space 40 being formed substantially along the height of the inner shell 20, and wherein the wall space 40 and the bottom space 42 are partially filled with a heat conduction medium 50; a first heat conduction plate 60 affixed to and in contact with a bottom surface 24 of the inner shell 20; and a second heat conduction plate 62 affixed to and in contact with a bottom surface 34 of the outer shell 30; wherein a plurality of raised ridges 70 are formed on the bottom surface 34 of the outer shell 30 and the second heat conduction plate 62 is configured to substantially conform to the shape of the plurality of the raised ridges 70. The plurality of the raised ridges 70 are upwardly raised and extend from about the center of the bottom surface 34 of the outer shell 30 and to about the edge of the bottom surface 34 of the outer shell 30. Furthermore, as in FIG. 4, the plurality of the raised ridges 70 has a curvature in a longitudinal direction, and may have a swirl or whirlpool shape curved substantially in the same direction.

The plurality of raised ridges 70, which has a swirl shape, forms a guide for the heat conduction medium 50 located in the bottom space 42 so that the heat conduction medium 50 located in the bottom space 42 substantially horizontally rotates and circulates fast in the bottom space 42 along the raised ridges 70. This fast flow and circulation of the heat conduction medium 50 in the bottom space 42 caused by the plurality of swirl-shaped raised ridges 70 allows for even heat transfer throughout the cooking vessel 100, reduces cooking time, thereby saving energy required for cooking.

As shown in FIG. 5, the cooking vessel 100 of the present invention further includes a cover 90 that fits over the inner shell 20 to substantially cover the opening 12 defined by the inner shell 20.

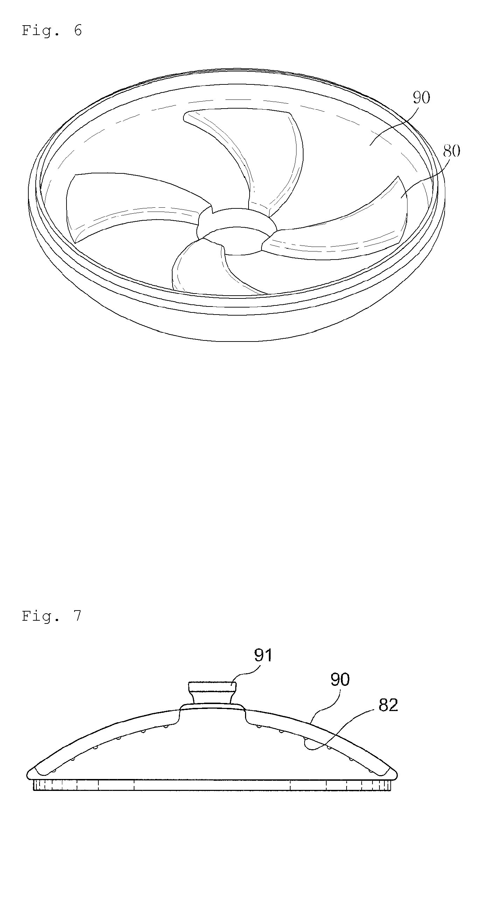

Also, as shown in FIG. 6, a plurality of embossed ridges 80 may be formed in an inner surface of the cover 90. The plurality of embossed ridges 80 are downwardly raised and extend from near the center of the inner surface of the cover 90 and to about the edge of the inner surface of the cover 90. Moreover, the plurality of embossed ridges 80 has a curvature in a longitudinal direction, and may have a swirl or whirlpool shape curved substantially in the same direction.

Because the plurality of embossed ridges 80 has a swirl shape, moisture inside the cooking vessel 100 does not escape to the outside, thereby preserving nutrients of the content in the cooking vessel 100, reducing cooking time, and saving energy.

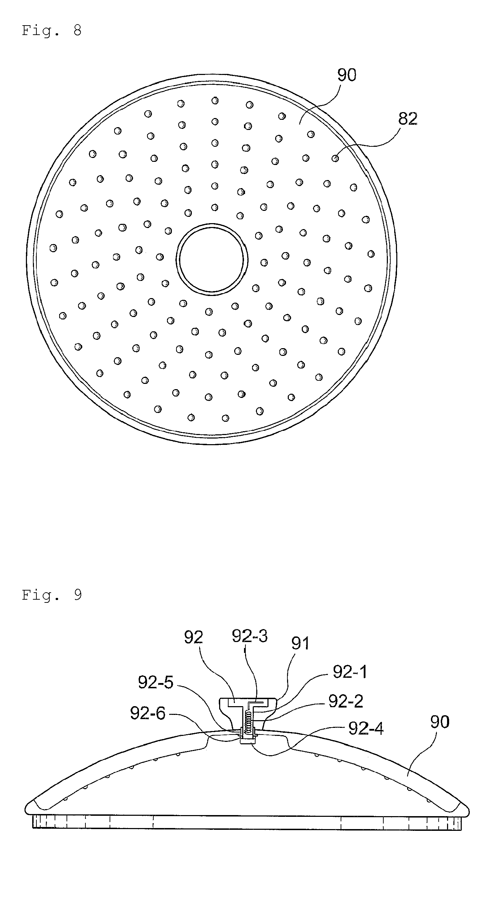

FIGS. 7 and 8 show still another embodiment of the cover of the cooking vessel. The cooking vessel 100 having a double-layered wall structure comprises a plurality of protrusions 82 formed on the inner surface of the cover 90. The plurality of protrusions 82 helps vapor steam coming out of the steam holes 95 condense and fall to the inner lid 94 in the form of water. Then, the water flows to the concave 13 of the inner shell 20. The water in the concave 13 forms a moisture sealing and the moisture sealing prevents vapor steam from leaking out through the gap between the inner lid 94 and the inner shell 20 during cooking. Moreover, low pressure is created inside the container 10 of the cooking vessel 100.

Because of the plurality of protrusions 82 formed on an inner surface of the cover 90, it can prevent moisture from escaping, like the plurality of embossed ridges 80.

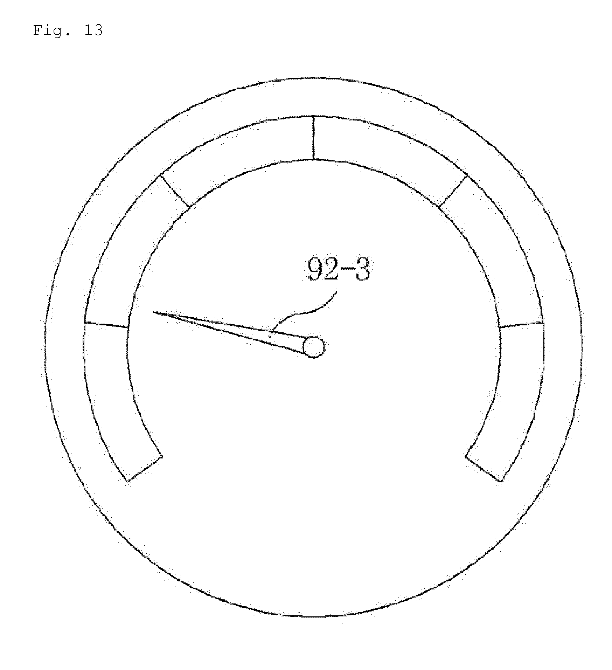

FIG. 9 illustrates a cross-sectional view of the cover 90 of the cooking vessel 100 according to the present invention, showing the means for gauging temperature. FIG. 13 shows a display unit of the means for gauging temperature according to the present invention. The means for gauging temperature 92 is a bimetal temperature sensor, which comprises a housing 92-1, a bimetallic helix 92-2, an indicating needle 92-3, and a display unit, wherein one end of the bimetallic helix 92-2 is fixed to the housing 92-1 and the other end of the bimetallic helix 92-2 drives the indicating needle 92-3 for indicating the temperature inside the cooking vessel, wherein the housing 92-1 is extended to inside of the cooking vessel 100 towards a screw 92-4 which is used to fix the knob 91 to the cover 90. A silicon ring 92-6 may be disposed between the cover 90 and the screw 92-4 for tightly sealing the gap between the screw 92-4 and the cover 90. There may be an additional silicon rubber 92-5 disposed between the cover 90 and the screw 92-4.

Because one end of the housing 92-1 is extended to inside of the cooking vessel 100, inside temperature can be more precisely measured by the bimetallic helix 92-2 and thus, the temperature indicated by the indicating needle 92-3 is more precise. More precisely measured temperature helps a user more conveniently and safely use the cooking vessel 100.

The display unit comprises graduated markings corresponding to specific temperatures, and the indicating needle 92-3 points to a mark corresponding to a temperature inside the cooking vessel 100, enabling the user to know the temperature inside the cooking vessel 100.

The cover 90 has a double-layered wall structure and the double-lid structure is obtained by the cover 90 and the lid 94, covering the opening 12. These structural features enable heat retention therein and fast cooking.

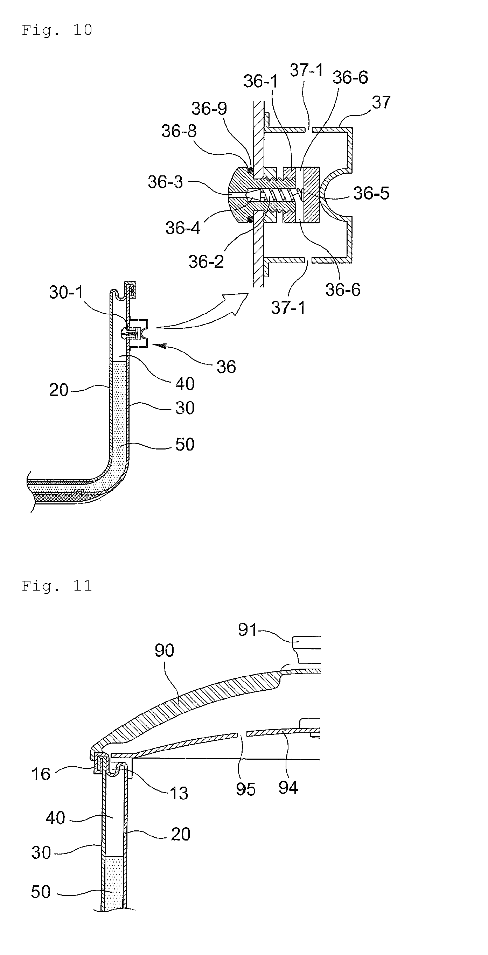

FIG. 10 illustrates an enlarged cross-sectional view of the pressure release device of the cooking vessel according to the present invention. The pressure releasing device 36 is for releasing the pressure within the inner space 40 when the pressure reaches a predetermined pressure level.

The pressure releasing device 36 comprises a spring housing 36-1 defining a spring device hole 36-2 and a pressure controlling hole 36-3 wherein one end of the pressure controlling hole 36-3 is open to the inner space 40 and the other end of the pressure controlling hole 36-3 is connected to the spring device hole 36-2; a pressure control valve 36-4 disposed in the spring device hole 36-2 to close and block the pressure controlling hole 36-3; a spring 36-5 disposed in the spring device hole 36-2 to pressure the pressure control valve 36-4 against the pressure controlling hole 36-3 wherein the spring device hole 36-2 has a greater diameter than the pressure controlling hole 36-3; a plurality of first vent holes 36-6 disposed in the spring device hole 36-2; and a bracket 37 fixed to the outer shell 30 to cover the spring housing 36-1 wherein the bracket 37 comprises a plurality of second vent holes 37-1.

When the pressure control valve 36-4 is open because of the high pressure in the inner space 40, the pressure within the inner space 40 is released through the pressure controlling hole 36-3, the spring device hole 36-2, the first vent holes 36-6, the second vent holes 37-1 and outside the cooking vessel 100. The bracket 37 is fixed to the outer shell 30 by spot welding and the pressure control valve 36-4 is made of silicon rubber. The predetermined pressure level is about 12 psi.

One end of the spring housing 36-1 comprises a groove 36-8 so that an elastic member 36-9 is disposed in the groove 36-8 to seal the gap between the spring housing 36-1 and a through hole 30-1 in the outer shell 30 wherein the through hole 30-1 is disposed in the outer shell 30 for installing the pressure releasing device 36 therethrough. The inner space 40 partially contains air 52 and the through hole 30-1 is located in the outer shell 30. The elastic member 36-9 may be silicon ring. In addition, the spring housing 36-1 may be made of aluminum, brass or stainless steel, and the bracket 37 may be made of stainless steel.

Because of the dual structure by the first vent holes 36-6 and the second vent holes 37-1, and the silicon ring 36-9, liquid cannot enter the inner space 40.

Because of the improved structure of the rolled joint 16 and the pressure release device 36, liquid cannot enter the inner space 40 and the pressure inside the inner space can be effectively controlled. Due to these improved structures, the risk of explosion of the cooking vessel has been substantially decreased.

FIG. 11 shows a partial cross-sectional view of the cooking vessel according to the present invention. The cooking vessel 100 includes a cover 90 that fits over the inner shell flange 22 to substantially cover the opening 12 defined by the inner shell 20. The cooking vessel 100 further includes an inner lid 94 substantially covering the opening 12 defined by the inner shell 20. Steam holes 95 are provided on the inner lid 94 for preventing liquid food like soup from overflowing during cooking.

Steam coming out of the steam holes 95 hits the inner surface of the cover 90 and condenses into water, flowing to the concave 13 of the inner shell 20. The water in the concave 13 and the silicon rubber on the peripheral portion of the inner lid 94 form a moisture sealing and the moisture sealing prevents vapor steam from leaking out during cooking. In addition, the structure of the silicon rubber of the peripheral portion of the inner lid 94 plays the role of secure sealing so that the cooking vessel 100 can function as a pressure cooker.

It is easy to preserve the heat inside the cooking vessel 100 as the inner lid 94 and the cover 90 stop the heat dissipating upward and the cover 90 also has a double-layered wall structure. The space between the inner lid 94 and the cover 90 traps heat therein and holds the temperature for an extended period of time. Then, low pressure of the container 10 is maintained. Thus, the cooking vessel of the present invention allows cooking the food automatically and slowly even after the heat source is removed and thus the cooking vessel functions as a slow cooker.

Accordingly, the present invention prevents food from being burnt or being partially heated and cooked, since the flame of heating source is not directly transferred to the inner shell 20 and the heat is not focused on any one specific region. Additionally, the cooking vessel 100 preserves vitamins, nutrients and natural flavors, creating a more pleasing and uniform texture to the cooking food. Besides, the air 52 stored in the wall space 40 acts as an insulator. Therefore, the food stays hot for a longer period of time and heat efficiency of the cooking utensil is improved.

The outer surface of the cover 90 may be coated with a thermochromic paint which can resist high temperature of the cooking vessel 100. The color of the thermochromic paint may change as the cooking vessel 100 is heated and its temperature increases. For example, as the temperature increases, the color of the thermochromic paint may change from blue to yellow, to light red, and to dark red.

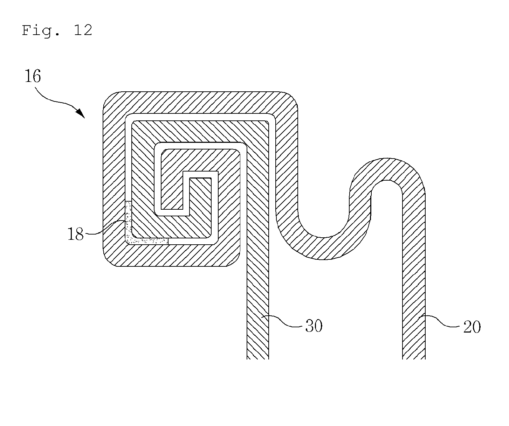

FIG. 12 shows an enlarged cross-sectional view of the rolled joint of the cooking vessel. The present invention involves the structure and manufacturing process of the rolled joint 16 of the cooking vessel 100. The cooking vessel 100 comprises an inner shell 20 having an opening 12 and an outer shell 30, a bottom surface 24 of the inner shell 20 extending upwardly to terminate at a top flange, a portion of the top flange forming an inner rim and an outer rim; the inner rim having a radius smaller than the radius of the outer rim; a bottom surface 34 of the outer shell 30 extending upwardly to terminate at a bottom flange, the bottom flange having a length smaller than the length of the top flange; an inner space 40, 42 formed in an area between the inner shell 20 and the outer shall 30 and at least partially containing a heat conduction medium 50; and a silicon ring 18 disposed between the top flange and the bottom flange.

Outer edges of the top flange are welded to outer edges of the bottom flange by seamless welding and then, the top flange and the bottom flange are curled together at about 360 degree angle and at least four times to form a rolled joint 16 together with the silicon ring 18 disposed between the rolled top and bottom flanges and the rolled joint 16 is compressed to seal the inner space 40. Furthermore, outer edges of the bottom flange are rolled at least one time, at about 360 degree angle, interlocked with the top flange and substantially flattened to form the interlocking rolled joint 16.

Because of the silicon ring 18 disposed between the rolled top and bottom flanges, sealing function of the rolled joint 16 is substantially improved and liquid cannot enter the inner space 40. Thus, the risk of explosion of the cooking vessel 100 is significantly reduced.

While the invention has been shown and described with reference to different embodiments thereof, it will be appreciated by those skilled in the art that variations in form, detail, compositions and operation may be made without departing from the spirit and scope of the invention as defined by the accompanying claims. Therefore, the above described embodiments are only examples of the invention, and the invention is not limited thereto.

## Claims

1. A cooking vessel having a double-layered wall structure comprising:
an inner shell having an opening having a bottom surface of the inner shell which extends upwardly to terminate at a top flange, a portion of the top flange forming an inner rim and an outer rim, the inner rim having a radius smaller than radius of the outer rim;
an outer shell having a bottom surface of the outer shell which extends upwardly to terminate at a bottom flange, the bottom flange having a length smaller than the length of the top flange;
an inner space formed in an area between the inner shell and the outer shell and at least partially containing a heat conduction medium; and
a silicon ring disposed between the top flange and the bottom flange,
further comprising a cover that fits over the inner shell flange to cover the opening defined by the inner shell, and
a means for gauging temperature installed on the knob of the cover,
wherein the means for gauging temperature is a bimetal temperature sensor, comprising a housing, a bimetallic helix and an indicating needle wherein one end of the bimetallic helix is fixed to the housing and the other end of the bimetallic helix drives the indicating needle for indicating the temperature inside the cooking vessel;
wherein the housing is exposed to inside of the cooking vessel through a screw which is used to fix the knob to the cover.

2. The cooking vessel of claim 1, wherein outer edges of the top flange is welded to outer edges of the bottom flange, rolled and flattened to form an interlocking joint, the silicon ring disposed inside a welding point between the top flange and the bottom flange.

3. The cooking vessel of claim 2, wherein outer edges of the top flange are welded to outer edges of the bottom flange by seamless welding.

4. The cooking vessel of claim 1, wherein the top flange and the bottom flange are curled together at 360 degree angle and at least four times to form a rolled joint and the rolled joint is compressed to hermetically seal the wall space.

5. The cooking vessel of claim 1, wherein outer edges of the bottom flange are rolled at least one time, at 360 degree angle, interlocked with the top flange and flattened to form an interlocking joint.

6. The cooking vessel of claim 1, wherein a knob is attached to the center of the cover; and wherein the cover is constructed to have a double-layered wall structure.

7. The cooking vessel of claim 6, further comprising an inner lid covering the opening defined by the inner shell wherein two stream holes are formed on the inner lid.

8. The cooking vessel of claim 1, further comprising a pressure releasing device for releasing the pressure within the inner space when the pressure reaches a predetermined pressure level, the pressure releasing device comprising:
a spring housing defining a spring device hole and a pressure controlling hole wherein one end of the pressure controlling hole is connected to the spring device hole;
a pressure control valve disposed in the spring device hole to close the pressure controlling hole;
a spring disposed in the spring device hole to pressure the pressure control valve against the pressure controlling hole wherein the spring device hole has a greater diameter than the pressure controlling hole;
a plurality of first vent holes disposed in the spring device hole; and
a bracket fixed to the outer shell to cover the spring housing wherein the bracket comprises a plurality of second vent holes;
wherein when the pressure control valve is open, the pressure within the inner space is released through the pressure controlling hole, the spring device hole, the first vent holes and the second vent holes.

9. The cooking vessel of claim 8, wherein one end of the spring housing comprises a groove so that an elastic member is disposed in the groove to seal the gap between the spring housing and a through hole in the outer shell wherein the through hole is disposed in the outer shell for installing the pressure releasing device therethrough.

10. The cooking vessel of claim 9, wherein the inner space partially contains air and the through hole is located in the outer shell.

11. The cooking vessel of claim 9, wherein the elastic member is silicon ring, and wherein the spring housing is made of aluminum, brass, or stainless steel and the bracket is made of stainless steel.

12. The cooking vessel of claim 1, wherein the heat conduction medium is silicon oil.

13. The cooking vessel of claim 1, wherein the outer shell is made of 3-ply stainless steel, which consists of three layers of AISI 304, aluminum, and AISI 304.

14. The cooking vessel of claim 1, further comprising a thermochromic paint affixed to outer surface of the outer shell for indicating the temperature of the cooking vessel.

15. The cooking vessel of claim 1, wherein the bottom surface of the outer shell is configured to form a plurality of raised ridge structures, which are whirlpool shape.

16. A cooking vessel having a double-layered wall structure comprising:
an inner shell having an opening;
an outer shell wherein a wall space and a bottom space are provided between the inner shell and the outer shell, the wall space being formed along the height of the inner shell,
and wherein the wall space and the bottom space are partially filled with a heat conduction medium;
a first heat conduction plate affixed to and in contact with a bottom surface of the inner shell; and
a second heat conduction plate affixed to and in contact with a bottom surface of the outer shell;
wherein the bottom surface of the outer shell is configured to form a raised ridge structure being upwardly raised and
the second heat conduction plate is configured to conform to the shape of the raised ridge structure,
wherein the raised ridge structure is annular and coaxially located with respect to the center of the bottom surface of the outer shell.

17. The cooking vessel of claim 16, wherein the raised ridge structure is formed apart from and along the edge of the bottom surface of the outer shell.

18. A cooking vessel having a double-layered wall structure comprising:
an inner shell having an opening;
an outer shell wherein a wall space and a bottom space are provided between the inner shell and the outer shell, the wall space being formed along the height of the inner shell,
and wherein the wall space and the bottom space are partially filled with a heat conduction medium;
a first heat conduction plate affixed to and in contact with a bottom surface of the inner shell; and
a second heat conduction plate affixed to and in contact with a bottom surface of the outer shell;
wherein a plurality of raised ridges are formed on the bottom surface of the outer shell and the second heat conduction plate is configured to conform to the shape of the plurality of the raised ridge;
wherein the plurality of the raised ridges are upwardly raised and extend from the center of the bottom surface of the outer shell and to the edge of the bottom surface of the outer shell; and
wherein the plurality of the raised ridges has a curvature in a longitudinal direction, being curved to the same direction.

19. The cooking vessel of claim 18, further comprising a cover that fits over the inner shell to cover the opening defined by the inner shell;
wherein a plurality of embossed ridges are formed in an inner surface of the cover;
wherein the plurality of embossed ridges are downwardly raised and extend from near the center of the inner surface of the cover and to the edge of the inner surface of the cover; and
Wherein the plurality of embossed ridges has a curvature in a longitudinal direction, being curved to the same direction.

20. The cooking vessel of claim 18, wherein the plurality of the raised ridges are whirlpool shape.

21. A cooking vessel having a double-layered wall structure comprising:
an inner shell having an opening;
an outer shell wherein a wall space and a bottom space are provided between the inner shell and the outer shell, the wall space being formed along the height of the inner shell,
and wherein the wall space and the bottom space are partially filled with a heat conduction medium;
a heat conduction plate affixed to and in contact with a bottom surface of the outer shell; and
a cover that fits over the inner shell to cover the opening defined by the inner shell;
wherein a plurality of protrusions are formed on the bottom surface of the cover,
further comprising a means for gauging temperature installed on the knob of the cover,
wherein the means for gauging temperature is a bimetal temperature sensor, comprising a housing, a bimetallic helix and an indicating needle wherein one end of the bimetallic helix is fixed to the housing and the other end of the bimetallic helix drives the indicating needle for indicating the temperature inside the cooking vessel;
wherein the housing is exposed to inside of the cooking vessel through a screw which is used to fix the knob to the cover.
